# EUROPEAN PATENT APPLICATION

(11) **EP 4 756 895 A2**
(43) Date of publication of application: **10.06.2026**
(21) Application number: 26173071.7
(22) Date of filing: 17.04.2026
(51) Int. Cl.: H01M 4/13, H01M 4/134, H01M 4/38, H01M 10/0525, H01M 10/0569

(54) **BATTERY AND ELECTRONIC DEVICE**

(30) Priority: 24.04.2025 CN 202510518118
(71) Applicant: Zhuhai CosMX Battery Co., Ltd., Zhuhai, Guangdong 519180 (CN)
(72) Inventor: YU, Zhili, Zhuhai, 519180 (CN); QIU, Yaming, Zhuhai, 519180 (CN)
(74) Representative: Elzaburu S.L.P.

(57) **Abstract**

The present disclosure provides a battery and an electronic device. The battery comprises a negative electrode plate (100), a positive electrode plate (200) and an electrolyte, wherein the negative electrode plate (100) comprises a negative electrode current collector (110) and a negative electrode active material layer (120) located on the surface of at least one side of the negative electrode current collector (110), the positive electrode plate (200) comprises a positive electrode current collector (210) and a positive electrode active material layer (220) located on the surface of at least one side of the positive electrode current collector (210), a tab groove (230) is provided on the positive electrode active material layer (220) with a positive tab (240) accommodated in the tab groove (230) and a tab adhesive layer (250) provided on the surface of the positive tab (240), a groove (130) is provided on the negative electrode active material layer (120), the tab groove (230) is arranged opposite the groove (130) in the third direction of the positive electrode plate (200), and an insulating adhesive layer (300) is provided in the groove (130), and the electrolyte comprises a fluorinated solvent, and the mass content percentage of the fluorinated solvent in the electrolyte is m1%, where 5% ≤ m1% ≤ 50%. The battery of the present disclosure can provide the preset groove in the negative electrode region with a certain corrosion resistance, such that the cycling life and safety performance of the battery can be improved.

## Description

### TECHNICAL FIELD

The present disclosure relates to the technical field of energy storage, and in particular to a battery and an electronic device comprising same.

### BACKGROUND

For the positive tab of a conventional battery, in order to prevent a short circuit of the electrode plate and to improve the safety performance of the battery, a tab adhesive is provided on the surface of the positive tab, and an insulating adhesive tape is provided on the negative electrode region corresponding to the positive tab. However, since both the tab and the tab adhesive are provided at the positive tab, and the insulating adhesive tape is provided on the corresponding negative electrode plate, the thickness of this region becomes relatively large, resulting in unevenness of the electrode plates.

At present, in order to reduce the impact of the tab adhesive provided at the positive tab and the insulating adhesive layer on the overall thickness of the electrode plates during the battery design process, a groove structure is usually preset in the negative electrode region corresponding to the positive tab to solve the problem of uneven thickness. Such groove can accommodate excess tab adhesive and insulating adhesive tape from the tab, and can also increase the electrolyte retention capacity of the negative electrode plate. However, due to the presence of the groove between the two electrode plates, a certain amount of electrolyte is often stored, and the active material in the groove is less than that in other parts, the electrolyte stored in the groove is prone to react with the current collector and corrode it, causing potential safety hazards and affecting the cycling life and safety performance of the battery.

### SUMMARY

Based on the above problem, the present disclosure provides a battery and an electronic device comprising same. The battery of the present disclosure can provide the preset groove in the negative electrode region with a certain corrosion resistance, such that the cycling life and safety performance of the battery can be improved.

In order to achieve the above object, the technical solutions of the present disclosure are as follow.

A first aspect of the present disclosure provides a battery including a negative electrode plate, a positive electrode plate and an electrolyte, wherein the negative electrode plate includes a negative electrode current collector, and a negative electrode active material layer located on a surface of at least one side of the negative electrode current collector, the positive electrode plate includes a positive electrode current collector, and a positive electrode active material layer located on a surface of at least one side of the positive electrode current collector,
a tab groove is provided on the positive electrode active material layer with a positive tab accommodated in the tab groove and a tab adhesive layer provided on a surface of the positive tab,
a groove is provided on the negative electrode active material layer, the tab groove is arranged opposite the groove in a third direction of the positive electrode plate, and an insulating adhesive layer is provided in the groove, and
the electrolyte includes a fluorinated solvent, and a mass content percentage of the fluorinated solvent in the electrolyte is m1%, where 5% ≤ m1% ≤ 50%.

A second aspect of the present disclosure provides an electronic device including the battery of the first aspect of the present disclosure.

By means of the above technical solution, the present disclosure has at least the following advantages over the prior art.

According to the present disclosure, a groove is provided on the negative electrode active material layer at the side corresponding to the tab groove of the positive electrode plate, and the groove is arranged opposite to the tab groove, such that the problem of uneven thickness of the electrode plate can be further solved, the consistency of the thickness of the electrode plate can be improved, and thus the cycling performance and safety performance of the battery are improved. However, when a groove is provided on the negative electrode active material layer at the side corresponding to the tab groove of the positive electrode plate, the electrolyte stored in the groove is prone to react with the current collector and corrode it. Therefore, the electrolyte of the present disclosure comprises a fluorinated solvent. Compared with traditional electrolyte solvents, the fluorinated solvent has a better oxidation stability and is less prone to decomposition. The fluorine element of the fluorinated solvent can chemically react with copper atoms on the surface of the current collector to form a stable fluorinated passivation layer. Such passivation layer generally has high thermal stability and chemical stability and can adhere tightly to the surface of the current collector, thereby providing the tab groove with a certain corrosion resistance, and by controlling the mass content percentage m1% of the fluorinated solvent in the electrolyte within an appropriate range, the corrosion resistance of the tab groove can be further improved, such that the cycling life and safety performance of the battery can be effectively improved.

The endpoints of ranges and any values disclosed herein are not limited to such exact ranges or values, and these ranges or values should be understood to include values close to these ranges or values. For numerical value ranges, one or more new numerical value ranges can be obtained between endpoint values of various ranges, between endpoint values of various ranges and individual point values, and between individual point values, and these numerical value ranges should be regarded as specifically disclosed herein.

### BRIEF DESCRIPTION OF DRAWINGS

FIG. 1 shows a schematic cross-sectional view of positive and negative electrode plates provided in an example of the present disclosure.
FIG. 2 shows a schematic top view of a negative electrode plate provided in an example of the present disclosure.

### List of reference signs:

Negative electrode plate 100, negative electrode current collector 110, negative electrode active material layer 120, groove 130, positive electrode plate 200, positive electrode current collector 210, positive electrode active material layer 220, tab groove 230, positive tab 240, tab adhesive layer 250, insulating adhesive layer 300.

### DESCRIPTION OF EMBODIMENTS

Hereinafter, specific embodiments of the present disclosure will be described in detail. It should be understood that the specific embodiments described herein are only used to illustrate and explain the present disclosure and are not used to limit the present disclosure.

In the detailed description of embodiments and claims, a list of items connected by the terms "at least one of" or other similar terms may mean any combination of listed items. For example, if items A and B are listed, then the phrase "at least one of A and B" means only A; only B; or both A and B. In another example, if items A, B, and C are listed, then the phrase "at least one of A, B, and C" means only A; or only B; only C; A and B (excluding C); A and C (excluding B); B and C (excluding A); or all of A, B, and C. The item A may include a single element or multiple elements. The item B may include a single element or multiple elements. The item C may include a single element or multiple elements.

A first aspect of the present disclosure provides a battery comprising a negative electrode plate, a positive electrode plate and an electrolyte, wherein the negative electrode plate comprises a negative electrode current collector and a negative electrode active material layer located on the surface of at least one side of the negative electrode current collector, the positive electrode plate comprises a positive electrode current collector and a positive electrode active material layer located on the surface of at least one side of the positive electrode current collector,
a tab groove is provided on the positive electrode active material layer with a positive tab accommodated in the tab groove and a tab adhesive layer provided on the surface of the positive tab,
a groove is provided on the negative electrode active material layer, the tab groove is arranged opposite the groove in the third direction of the positive electrode plate, and an insulating adhesive layer is provided in the groove, and
the electrolyte comprises a fluorinated solvent, and the mass content percentage of the fluorinated solvent in the electrolyte is m1%, where 5% ≤ m1% ≤ 50%.

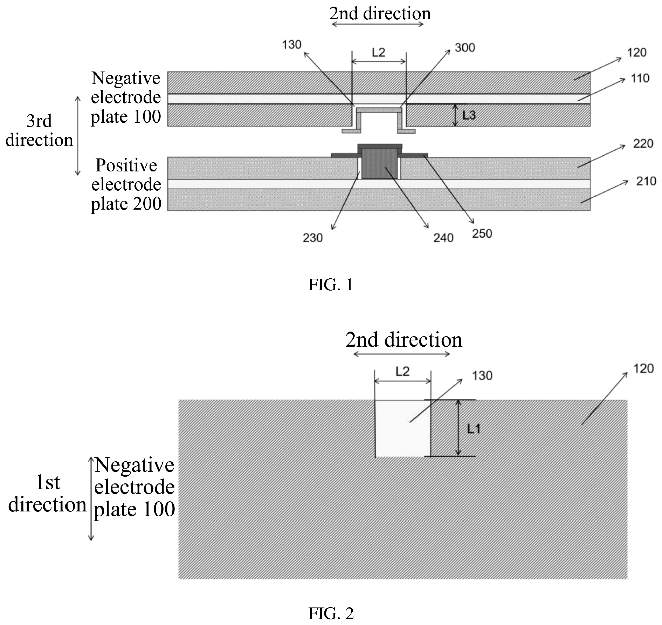

As shown in FIG. 1, which is a schematic cross-sectional view of positive and negative electrode plates according to an example of the present disclosure, the negative electrode plate 100 comprises a negative electrode current collector 110 and a negative electrode active material layer 120 located on the surface of at least one side of the negative electrode current collector 110, and the positive electrode plate 200 comprises a positive electrode current collector 210 and a positive electrode active material layer 220 located on the surface of at least one side of the positive electrode current collector 210, a tab groove 230 is provided on the positive electrode active material layer 220 with a positive tab 240 accommodated in the tab groove 230 and a tab adhesive layer 250 provided on the surface of the positive tab, a groove 130 is provided on the negative electrode active material layer 120, the tab groove 230 is arranged opposite the groove 130 in the third direction of the positive electrode plate 200, and an insulating adhesive layer 300 is provided in the groove 130, and the arrangement of the tab groove 230 opposite the groove 130 in the third direction of the positive electrode plate 200 may be interpreted as that the overlapping projection area of the tab groove 230 and the groove 130 is greater than 80% of the projection area of the tab groove 230, or the overlapping projection area of the tab groove and the groove is greater than or equal to 80% of the projection area of the groove, for example, 81%, 82%, 83%, 84%, 85%, 86%, 87%, 88%, 89%, 90%, 91%, 92%, 93%, 94%, 95%, 96%, 97%, 98%, 99% or 100%.

According to the present disclosure, a groove is provided on the negative electrode active material layer at the side corresponding to the tab groove of the positive electrode plate, and the groove is arranged opposite to the tab groove, such that the impact of the tab adhesive and the insulating adhesive layer arranged at the tab between the electrode plates on the overall thickness consistency of the electrode plate can be reduced, and the problem of uneven thickness of the electrode plate is solved, thus the consistency of the thickness of the electrode plate is improved, and the cycling performance and safety performance of the battery are further improved. However, the provision of a groove in the negative electrode active material layer at the side corresponding to the tab groove of the positive electrode plate will result in a groove gap between the two electrode plates at this position, which will store a certain amount of electrolyte. When the electrolyte retention is relatively high, the electrolyte stored in the groove is prone to react with the aluminum foil of the positive electrode current collector and corrode it, causing potential safety hazards and affecting the cycling life of the battery. Based on this, the electrolyte of the present disclosure comprises a fluorinated solvent. Compared with traditional electrolyte solvents (carbonates or carboxylates), the fluorinated solvent has a better oxidation stability and is less prone to decomposition. The fluorine element of the fluorinated solvent can chemically react with copper atoms on the surface of the aluminum foil of the positive electrode current collector to form a stable fluorinated passivation layer. Such passivation layer generally has high thermal stability and chemical stability, and can adhere tightly to the surface of the positive electrode current collector, providing the groove at the tab with a certain corrosion resistance, thereby alleviating the impact of structural designs such as grooves on battery performance and effectively improving the cycling life and safety performance of the battery.

Further, the mass content percentage of the fluorinated solvent in the electrolyte is m1%, where 5% ≤ m1% ≤ 50%, for example 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49% or 50%. When the mass content percentage m1% of the fluorinated solvent in the electrolyte is too high, an excessively thick fluorinated passivation layer will form on the surface of aluminum foil of the positive electrode current collector, which hinders electron conduction and ion transport, such that the internal resistance of the battery increases during charging and discharging. This results in an increase in the heat generation of the battery when it is charged, which in turn affects the safety performance of the battery. Therefore, the mass content percentage m1% of the fluorinated solvent in the electrolyte should not be too high. In addition, in order to ensure uniform thickness of the fluorinated passivation layer, the mass content percentage m1% of the fluorinated solvent in the electrolyte should also not be too low, so as to avoid localized overheating that may cause non-uniform temperature distribution inside the battery and reduced corrosion resistance, thereby further improving the cycling life and safety performance of the battery.

In an embodiment, 10% ≤ m1% ≤ 40%.

In the present disclosure, as shown in FIGs. 1 and 2, with FIG. 2 being a schematic top view of a negative electrode plate according to an example of the present disclosure, the length of the groove in the first direction of the negative electrode plate is L1, where 5 mm ≤ L1 ≤ 40 mm, for example 5 mm, 10 mm, 15 mm, 20 mm, 25 mm, 30 mm, 35 mm or 40 mm.

In an embodiment, 10 mm ≤ L1 ≤ 30 mm.

In the present disclosure, as shown in FIG. 2, the width of the groove in the second direction of the negative electrode plate is L2, where 4 mm ≤ L2 ≤ 30 mm, for example, 4 mm, 6 mm, 8 mm, 10 mm, 12 mm, 14 mm, 16 mm, 18 mm, 20 mm, 22 mm, 24 mm, 26 mm, 28 mm or 30 mm.

In an embodiment, 6 mm ≤ L2 ≤ 15 mm.

In the present disclosure, as shown in FIG. 1, the depth of the groove in the third direction of the negative electrode plate is L3, where 0.005 mm ≤ L3 ≤ 0.15 mm, for example, 0.005 mm, 0.006 mm, 0.007 mm, 0.008 mm, 0.009 mm, 0.01 mm, 0.02 mm, 0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm or 0.15 mm.

In an embodiment, the depth of the groove in the third direction of the negative electrode plate satisfies 0.01 mm ≤ L3 ≤ 0.1 mm.

The grooves on the negative electrode plate need to accommodate both the positive tab and the tab adhesive layer at the tab overflowing from the positive tab as well as the overflowed adhesive of the insulating adhesive layer provided in the corresponding negative electrode region, so as to avoid uneven thickness at the tab. Accordingly, the dimensions of the groove in all directions should not be too small, so as to provide sufficient space for accommodating the overflowed adhesive. However, the dimensions of the groove should also not be too large, because if the dimensions of the groove are too large, it will result in excessive loss of the negative electrode active material layer, leading to battery capacity attenuation and increased impedance, which will adversely affect the overall performance of the battery.

In the present disclosure, as shown in FIGs 1 and 2, the orthographic projection area of the groove 130 in the third direction of the negative electrode plate is S mm², where S mm² = L1 × L2; the mass content percentage of the fluorinated solvent in the electrolyte is m1%; and S and m1 satisfy m1 ≥ S/10.

FIG. 2 is a schematic top view of a negative electrode plate according to an example of the present disclosure, the groove having a rectangle orthographic projection, the area of which can be obtained by multiplying the length of the rectangle by its width; i.e., S mm² = L1 × L2.

When the mass content percentage m1% of the fluorinated solvent in the electrolyte and the projection area S mm² (S = L1 × L2) of the groove satisfy: m1 ≥ S/10, the negative electrode plate can effectively accommodate the insulating adhesive overflowing from the tab and can store a sufficient amount of the fluorinated solvent in the groove, which can improve the electrolyte retention capacity of the negative electrode plate and the corrosion resistance of the negative electrode plate, thus further improving the cycling life and thermal safety performance of the battery.

In the present disclosure, the fluorinated solvent includes at least one of a fluorinated carbonate solvent, a fluorinated carboxylate solvent, a fluorinated ether solvent, and a fluorinated benzene solvent.

In an embodiment, the fluorinated solvent includes at least one of fluorinated methyl ethyl carbonate, fluorinated diethyl carbonate, fluorinated dimethyl carbonate, fluorinated ethyl acetate, fluorinated methyl propionate, fluorinated ethyl propionate, fluorinated propyl propionate, bis(2,2,2-trifluoroethyl) ether, 2,2,2-trifluoroethyl-1,1,2,2-tetrafluoroethyl ether, 1,1,2,2-tetrafluoroethyl-2,2,3,3-tetrafluoropropyl ether, 1H,1H,5H-octafluoropentyl-1,1,2,2-tetrafluoroethyl ether, methyl nonafluorobutyl ether, tris(trifluoroethoxy)methane, ethyl nonafluorobutyl ether, monofluorobenzene, and p-difluorobenzene. It should be understood that "fluorinated" may be mono-, di-, trifluorinated, etc., the number of fluorine substitutions is not limited, and the position of fluorine substitution is not limited, and can be any substitutable position.

In the present disclosure, the electrolyte may also comprise electrolyte additives such as fluoroethylene carbonate and fluoropropylene carbonate.

In the present disclosure, the electrolyte may also comprise an unsaturated nitrile compound including at least one of 1,4-dicyano-2-butene, 2-methyl-2-butenenitrile, and isopropylidenemalononitrile.

When an unsaturated nitrile compound is further added into the electrolyte containing the fluorinated solvent, the combined use of the fluorinated solvent and the unsaturated nitrile compound can reduce the interfacial side reactions between the electrolyte and the electrode plates, reduce heat and gas generation inside the battery, and improve the thermal safety performance of the battery. Specifically, the unsaturated nitrile compound can form a protective layer on the electrode surface during charging and discharging of the battery. Compared with traditional nitrile compounds, the unsaturated nitrile compound can undergo polymerization reactions to increase the reactive sites at the interface of the positive electrode plate, thereby effectively preventing detachment of active material from the electrode plate and the decomposition of the electrolyte. In addition, the unsaturated nitrile compound forms a stable solvation structure in a fluorinated solvent system, which can reduce charge accumulation and ion aggregation inside the battery, suppress side reactions inside the battery, thus further improving the cycling stability and service life of the battery.

In an embodiment, the mass content percentage of the unsaturated nitrile compound in the electrolyte is 0.1% - 5%, for example, 0.1%, 0.2%, 0.3%, 0.4%, 0.5%, 1%, 1.5%, 2%, 2.5%, 3%, 3.5%, 4%, 4.5% or 5%.

In the present disclosure, as shown in FIG. 1, the surface of the positive tab 240 is provided with a tab adhesive layer 250. By providing the tab adhesive layer 250 on the surface of the positive tab 240, the short circuit between the positive and negative electrodes can be prevented. However, the dimensional design of the tab adhesive layer in various directions affects the thickness uniformity at the positive tab. Although the groove provided at the corresponding position on the negative electrode plate can improve this problem, if the volume of the tab adhesive layer exceeds the accommodating capacity of the groove, it will still affect the thickness uniformity of the electrode plate, thereby affecting the cycling life and safety performance of the battery. Based on this, further, in the present disclosure, the length of the tab adhesive layer in the first direction of the positive electrode plate is a, where 10 mm ≤ a ≤ 40 mm, for example, 10 mm, 11 mm, 12 mm, 13 mm, 14 mm, 15 mm, 16 mm, 17 mm, 18 mm, 19 mm, 20 mm, 25 mm, 30 mm, 35 mm or 40 mm. It should be noted that there may be a height difference between the positive tab and the positive electrode active material layer in the third direction of the positive electrode plate as shown in FIG. 1, but the length a of the tab adhesive layer in the present disclosure represents only the length in the first direction of the positive electrode plate.

In an embodiment, 10 mm ≤ a ≤ 15 mm.

In the present disclosure, the width of the tab adhesive layer in the second direction of the positive electrode plate is b, where 8 mm ≤ b ≤ 35 mm, for example, 8 mm, 9 mm, 10 mm, 11, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, 31 mm, 32 mm, 33 mm, 34 mm or 35 mm.

In an embodiment, 20 mm ≤ b ≤ 30 mm.

In the present disclosure, the orthographic projection area of tab adhesive layer in the third direction of the positive electrode plate is 150 mm² - 700 mm², for example, 150 mm², 200 mm², 250 mm², 300 mm², 350 mm², 400 mm², 450 mm², 500 mm², 550 mm², 600 mm², 650 mm²or 700 mm².

In an embodiment, the orthographic projection area of the tab adhesive layer in the third direction of the positive electrode plate is 180 mm²- 480 mm².

If the area of the tab adhesive layer covering the positive tab is too small, it may not completely cover the positive tab, and there is a risk of short circuit. If the area of the tab adhesive layer covering the positive tab is too large, the area of the groove of the negative electrode active material layer on the surface of the corresponding negative electrode plate will be correspondingly increased, avoiding unevenness of the insulating adhesive at the tab, but when the area of the tab adhesive layer covering the positive tab is too large, the volume space inside the small-area groove is too small to accommodate the excessive overflowed tab adhesive. Therefore, the area of the groove needs to be correspondingly increased. However, once the area of the groove is increased, on the one hand, it will cause the loss of active material on the negative electrode side and reduce the energy density of the battery; on the other hand, it will also lead to an increase in the corrodible area of the negative electrode current collector, intensify the corrosion of the negative electrode current collector, and reduce the cycling performance and thermal safety performance of the battery. Therefore, according to the present disclosure, by controlling the area size of the tab adhesive layer covering the tab, the cycling stability of the battery can be effectively improved, the risk of short circuit of the battery can be prevented, and the safety performance of the battery can be improved.

Further, fluorinated solvent has a good interaction with the tab adhesive layer, which can improve the bonding performance between the tab adhesive layer and the positive electrode plate, ensure the electrical conductivity and mechanical strength of the battery, thus improving the overall performance of the battery and preventing the risks such as short circuit and thermal runaway during the cycling of the battery. In addition, the high ionic conductivity of the fluorinated solvent can facilitate the migration of lithium ions inside the battery, and the combination of the tab adhesive layer and the solvent helps maintain this performance, thereby improving the charging and discharging efficiency of the battery. Moreover, the good infiltration and permeability allow the fluorinated solvent to better penetrate the surface of the tab adhesive layer and can improve the adhesion between the tab adhesive layer and the positive electrode current collector. This not only improves the effectiveness of the tab adhesive layer but may also, to a certain extent, reduce the safety issue of the battery caused by insufficient adhesion.

In the present disclosure, the negative electrode active material layer comprises a silicon-based material, wherein the mass content of silicon element in the negative electrode active material layer is m2% based on the total mass of the negative electrode active material layer, with m1 and m2 satisfying m1 ≥ m2.

In an embodiment, the mass content of silicon element in the negative electrode active material layer is m2% based on the total mass of the negative electrode active material layer, where 2% ≤ m2 ≤ 40%, for example, 2%, 3%, 4%, 5%, 6%, 7%, 8%, 9%, 10%, 15%, 20%, 25%, 30%, 35% or 40%.

In an embodiment, 15 ≤ m2% ≤ 30.

When the mass content percentage m1% of the fluorinated solvent in the electrolyte is greater than the mass content percentage m2% of silicon element in the negative electrode active material layer, the fluorinated solvent contributes to the formation of a more stable solid electrolyte interphase (SEI) film and reduces the decomposition of the electrolyte on the silicon negative electrode side, thereby effectively improving the cycling life of the battery, while also alleviating the mechanical stress caused by the silicon-based material contained in the negative electrode active material layer and reducing the likelihood of cracking of the negative electrode active material layer, thus extending the cycling life of the battery and improving the performance of the battery.

In the present disclosure, the particle size Dv50 of the silicon-based material is 5 µm - 15 µm, for example, 5 µm, 6 µm, 7 µm, 8 µm, 9 µm, 10 µm, 11 µm, 12 µm, 13 µm, 14 µm or 15 µm.

In an embodiment, the particle size Dv50 of the silicon-based material is 6 µm - 10 µm.

In the present disclosure, the average sphericity q of the silicon-based material particles is 0.5 - 1, for example, 0.5, 0.6, 0.7, 0.8, 0.9 or 1.

In an embodiment, the average sphericity q of the silicon-based material particles is 0.7 - 1.

The fluorinated solvent has a lower surface tension. By controlling the particle size Dv50 of the silicon-based material and the average sphericity q of the silicon-based material particles, it is helpful for the fluorinated solvent to better infiltrate the surface of the silicon negative electrode. The low surface tension of the outer layer enables the solvent molecules to spread more easily on the surface of the silicon negative electrode, forming a uniform coating layer, which reduces the interfacial resistance between the silicon negative electrode and the electrolyte and helps to improve the transport efficiency of lithium ions, thereby effectively improving the ionic conductivity of the negative electrode plate, alleviating volume changes in the negative electrode plate, and further improving the cycling stability of the battery.

In the present disclosure, the negative electrode active material layer comprises a base coating adjacent to the negative electrode current collector and a top coating located on the surface of one side of the base coating facing away from the negative electrode current collector, wherein the areal density s1 of the base coating is greater than the areal density s2 of the top coating.

While the provision of the groove on the electrode plate inevitably leads to some capacity loss, applying the negative electrode active material layer using a double-layer coating technique can effectively compensate for this, enabling the top coating to have a high porosity structure with a lower areal density s2 and the lower base coating to have a high compaction density structure with a higher areal density s1, resulting in a gradient distribution of the density of the negative electrode active material within the negative electrode active material layer, which can increase the energy density of the battery and enhance its ability to store electrical energy, thereby balancing high energy density with superior fast-charging performance.

In the present disclosure, 0.5 mg/cm² ≤ s1 ≤ 5 mg/cm², for example, 0.5 mg/cm², 1 mg/cm², 1.5 mg/cm², 2 mg/cm², 2.5 mg/cm², 3 mg/cm², 3.5 mg/cm², 4 mg/cm², 4.5 mg/cm² or 5 mg/cm².

In an embodiment, 1 mg/cm² ≤ s1 ≤ 3 mg/cm².

In the present disclosure, 0.2 mg/cm² ≤ s2 ≤ 3 mg/cm², for example, 0.2 mg/cm², 0.5 mg/cm², 1 mg/cm², 1.5 mg/cm², 2 mg/cm², 2.5 mg/cm² or 3 mg/cm².

In an embodiment, 0.5 mg/cm² ≤ s2 ≤ 2 mg/cm².

In the present disclosure, the ratio of the areal density s1 of the base coating to the areal density s2 of the top coating is M, where 1 ≤ M ≤ 2.5, for example, 1, 1.1, 1.2, 1.3, 1.4, 1.5, 1.6, 1.7, 1.8, 1.9, 2, 2.1, 2.2, 2.3, 2.4 or 2.5.

In an embodiment, 1 ≤ M ≤ 1.5.

In the present disclosure, the thickness of the base coating is 0.02 mm - 0.08 mm, for example, 0.02 mm, 0.021 mm, 0.022 mm, 0.023 mm, 0.024 mm, 0.025 mm, 0.026 mm, 0.027 mm, 0.028 mm, 0.029 mm, 0.03 mm, 0.031 mm, 0.032 mm, 0.033 mm, 0.034 mm, 0.035 mm, 0.036 mm, 0.037 mm, 0.038 mm, 0.039 mm, 0.04 mm, 0.05 mm, 0.055 mm, 0.06 mm, 0.065 mm, 0.07 mm, 0.075 mm or 0.08 mm.

In an embodiment, the thickness of the base coating is 0.025 mm - 0.08 mm.

In the present disclosure, the thickness of the top coating is 0.015 mm - 0.07 mm, for example, 0.015 mm, 0.016 mm, 0.017 mm, 0.018 mm, 0.019 mm, 0.02 mm, 0.021 mm, 0.022 mm, 0.023 mm, 0.024 mm, 0.025 mm, 0.026 mm, 0.027 mm, 0.028 mm, 0.029 mm, 0.03 mm, 0.031 mm, 0.032 mm, 0.033 mm, 0.034 mm, 0.035 mm, 0.04 mm, 0.045 mm, 0.05 mm, 0.055 mm, 0.06 mm, 0.065 mm or 0.07 mm.

In an embodiment, the thickness of the top coating is 0.02 mm-0.07 mm.

For the battery according to the present disclosure, the lithium-ion battery further comprises a separator, which can also be a separator conventionally used in the art, such as PP (Polypropylene) film or PE (Polyethylene) film.

For the battery according to the present disclosure, the positive electrode active material layer comprises a layered lithium oxide composite, with the chemical formula of Li₍₁₊ₓ₎Ni_{y}Co_{z}M_{(1-y-z)}O₂, wherein -0.1 ≤ x ≤ 1; 0 ≤ y ≤ 1, 0 ≤ z ≤ 1, and 0 ≤ y + z ≤ 1; and wherein M is one or more of Mg, Zn, Ga, Ba, Al, Fe, Cr, Sn, V, Mn, Sc, Ti, Nb, Mo and Zr.

For the battery according to the present disclosure, the negative electrode active material layer comprises a carbon-based negative electrode material, the carbon-based negative electrode material including at least one of artificial graphite, natural graphite, mesocarbon microbeads, hard carbon, and soft carbon.

For the battery according to the present disclosure, the negative electrode active material layer comprises a silicon carbon negative electrode material, the silicon carbon negative electrode material including at least one of nano-silicon (Si), silicon oxide material (SiOₓ (0 < x < 2)), and silicon carbon material.

For the battery according to the present disclosure, the electrolyte further comprises a lithium salt, which includes at least one of lithium hexafluorophosphate, lithium difluorophosphate, lithium difluoro(oxalato)borate, lithium bis(trifluoromethanesulfonyl)imide, lithium difluorobis(oxalato)phosphate, lithium tetrafluoroborate, lithium bis(oxalato)borate, lithium hexafluoroantimonate, lithium hexafluoroarsenate, lithium bis(pentafluoroethanesulfonyl)imide, and lithium tris(trifluoromethanesulfonyl)methide.

For the battery according to the present disclosure, the electrolyte further comprises an organic solvent, which includes at least one of ethylene carbonate, propylene carbonate, dimethyl carbonate, diethyl carbonate, ethyl methyl carbonate, n-butyl acetate, isobutyl acetate, n-amyl acetate, isoamyl acetate, ethyl propionate, n-propyl propionate, methyl butyrate, ethyl butyrate, and ethyl n-butyrate.

The battery of the present disclosure can be prepared by conventional methods in the art. Specifically, a positive electrode plate, a separator, and a negative electrode plate are sequentially stacked to ensure that the separator is positioned between the positive and negative electrode plates to play an isolation role, and then wound to obtain an electrolyte-free bare cell. The bare cell is placed into an outer packaging foil, and the electrolyte is injected into the dried bare cell, followed by processes including vacuum sealing, leaving to stand, formation, shaping, sorting, etc., to obtain the desired lithium-ion battery.

A second aspect of the present disclosure provides an electronic device comprising the battery of the first aspect of the present disclosure.

The kind of the electronic device is not limited in the present disclosure, and in particular may include, but is not limited to, a notebook computer, a input computer, a mobile computer, an e-book player, a portable telephone, a portable fax machine, a portable copier, a portable printer, stereo headphones, a video recorder, a liquid crystal display television, a portable cleaner, a portable CD player, a mini disk, a transceiver, an electronic notebook, a calculator, a memory card, a portable recorder, a radio, a backup power supply, a motor, an automobile, a motorcycle, an electric bike, a bike, a lighting fixture, a toy, a game machine, a clock, an electric tool, a flash lamp, a camera, a large household storage battery, a lithium ion capacitor, etc.

The present disclosure is further described in detail below in conjunction with specific embodiments. It should be understood that the following examples are merely illustrative and explanatory of the present disclosure and should not be construed as limiting the scope of protection of the present disclosure. All technologies implemented on the basis of the above-mentioned content of the present disclosure are encompassed within the scope intended to be protected by the present disclosure.

Unless otherwise specified, the experimental methods used in the following examples are conventional methods. Unless otherwise specified, the reagents and materials used in the following examples can be obtained from commercial sources.

### Example 1

The lithium-ion battery of the present disclosure was obtained by the following process.

### 1) Preparation of positive electrode plate

A positive electrode active material of lithium cobalt oxide (LiCoO₂), polyvinylidene fluoride (PVDF), SP (super P) and carbon nanotubes (CNTs) were mixed in a mass ratio of 96 : 2 : 1.5 : 0.5, then N-methylpyrrolidone (NMP) was added, and the mixture was stirred in a vacuum stirrer until the mixed system became a positive electrode active slurry with uniform flowability. The positive electrode active slurry was uniformly coated onto both surfaces of an aluminum foil. The coated aluminum foil was dried, and then rolled and slit to obtain the desired positive electrode plate. A tab groove was then formed on the surface of the positive electrode plate via laser cleaning. A positive tab was welded within the tab groove, and a tab adhesive was coated on the surface of the positive tab. The length a of the tab adhesive layer was 12 mm, the width b was 24 mm, and the projection area thereof in the third direction of the positive electrode plate was 288 mm².

### 2) Preparation of negative electrode plate

A negative electrode active material of artificial graphite, a silicon carbon material (with a particle size Dv50 of 8 µm and an average sphericity q of 0.75), sodium carboxymethyl cellulose (CMC-Na), a styrene-butadiene rubber, conductive carbon black (SP), and single-walled carbon nanotubes (SWCNTs) were mixed in a mass ratio of 40 : 54.5 : 2.5 : 1.5 : 1 : 0.5, and then deionized water was added and the mixture was stirred in a vacuum stirrer to obtain a negative electrode active slurry 1.

A negative electrode active material of artificial graphite, a silicon carbon material (with a particle size Dv50 of 8 µm and an average sphericity q of 0.75), sodium carboxymethyl cellulose (CMC-Na), a styrene-butadiene rubber, conductive carbon black (SP), and single-walled carbon nanotubes (SWCNTs) were mixed in a mass ratio of 54.5 : 40.5 : 1.5 : 1 : 0.5, and then deionized water was added and the mixture was stirred in a vacuum stirrer to obtain a negative electrode active slurry 2.

The negative electrode active slurry 1 and the negative electrode active slurry 2 were uniformly coated onto both surfaces of a copper foil, where the negative electrode active slurry 1 was used as the base coating material, and the negative electrode active slurry 2 was used as the top coating material. The thickness of the base coating was 0.03 mm, and the thickness of the top coating was 0.022 mm. The coated copper foil was air-dried at room temperature, then transferred to an oven at 80°C for drying for 10 h, followed by cold pressing and slitting to obtain the negative electrode plate, the thickness of which was 100 µm. A groove was then formed on the surface of the negative electrode plate via laser cleaning. The dimensions of the groove were as follows: L1 = 15 mm, L2 = 10 mm, and the groove depth L3 = 0.05 mm. Further, the mass content percentage m2% of silicon element in the negative electrode active material layer was measured to be 25%. The areal density s1 of the base coating was 2.3 mg/cm², the areal density s2 of the top coating was 1.74 mg/cm², and M = s1/s2 = 1.32.

### 3) Preparation of electrolyte

In a glove box filled with argon (H₂O < 0.1ppm, O₂ < 0.1 ppm), the solvents EC (Ethylene Carbonate), PC (Propylene Carbonate), PP (Propyl Propionate), and difluoroethyl acetate (the fluorinated solvent selected was difluoroethyl acetate among fluoroethyl acetate) were mixed in a ratio of 1 : 1 : 2 : 3. The mass content percentage m1% of difluoroethyl acetate in the electrolyte was 30%. 12.5 wt% of fully dried lithium hexafluorophosphate (LiPF₆) based on the total mass of the electrolyte was then quickly added, followed by the addition of 0.5 wt% of 1,4-dicyano-2-butene based on the total mass of the electrolyte, and other additives including 2 wt% of 1,3,5-hexanetricarbonitrile (HTCN), 1 wt% of adiponitrile (ADN), 4 wt% of 1,3-propane sultone, and 10 wt% of fluoroethylene carbonate. The mixture was stirred evenly. After passing the moisture and free acid tests, the desired electrolyte was obtained.

### 4) Preparation of lithium-ion battery

The positive electrode plate from step 1), the negative electrode plate from step 2), and the separator were stacked in the order of the positive electrode plate, the separator, and the negative electrode plate, and then wound to obtain a cell. The cell was placed into an aluminum foil packaging, and the electrolyte from step 3) was injected into the packaging, followed by processes including vacuum sealing, leaving to stand, formation, shaping, sorting, etc., to obtain a lithium-ion battery. In the present disclosure, the charge/discharge voltage range of the battery was 3.0-4.58 V.

### Example 2 group

This example was carried out with reference to Example 1, with the only difference being that, during the preparation of the electrolyte, the mass ratios of the solvent components were changed such that the mass content percentage m1% of the fluorinated solvent in the electrolyte was changed, or the type of the fluorinated solvent was also changed. Among them, the type of the fluorinated solvent in Examples 2-1 and 2-3 were not changed; the fluorinated solvent was selected as fluorinated benzene in Example 2-2; and the fluorinated solvent was selected as a mixture of difluoroethyl acetate and fluorinated ether (1,1,2,2-tetrafluoroethyl-2,2,3,3-tetrafluoropropyl ether) in equal proportions in Example 2-4. See Table 1 for details.

### Example 3 group

This example was carried out with reference to Example 1, with the only difference being that, during the preparation of the negative electrode plate, the dimension of the groove was changed by adjusting the parameters of the laser cleaning process. See Table 1 for details.

### Example 4 group

This example was carried out with reference to Example 1, with the only difference being that, during the preparation of the negative electrode plate, the mass content percentage m2% of silicon element in the negative electrode active material layer was changed, or the particle size and the average sphericity q of the silicon-based material were also changed. Specifically:
in Example 4-1, the mass content percentage m2% of silicon element in the negative electrode active material layer was 15%, the particle size Dv50 was 5 µm, and the average sphericity q was 0.75;
in Example 4-2, the mass content percentage m2% of silicon element in the negative electrode active material layer was 30%, the particle size Dv50 was 15 µm, and the average sphericity q was 1;
in Example 4-3, the mass content percentage m2% of silicon element in the negative electrode active material layer was 40%, the particle size Dv50 was 8 µm, and the average sphericity q was 0.5.

See Table 1 for details.

### Example 5

This example was carried out with reference to Example 1, with the only difference being that, the areal densities of the base coating and the top coating were changed, or the thicknesses of the base coating and the top coating were also changed. Specifically:
in Example 5-1, the negative electrode active material layer was not distinguished into a base coating and a top coating, and the negative electrode active slurry used was negative electrode active slurry 1, the thicknesses and areal densities of the base coating and the top coating were not changed, and the areal density was 2.3 mg/cm²;
in Example 5-2, the areal densities and thicknesses of the base coating and the top coating were changed by changing the coating process of the negative electrode active material layer or the preparation process of the negative electrode plate, with the base coating having a thickness of 0.08 mm, the top coating having a thickness of 0.015 mm, the base coating having an areal density s1 of 0.5 mg/cm², and the top coating having an areal density s2 of 3 mg/cm²;
in Example 5-3, the areal densities and thicknesses of the base coating and the top coating were changed by changing the coating process of the negative electrode active material layer or the preparation process of the negative electrode plate, with the base coating having a thickness of 0.02 mm, the top coating having a thickness of 0.07 mm, the base coating having an areal density s1 of 5 mg/cm², and the top coating having an areal density s2 of 0.2 mg/cm².

See Table 1 for details.

### Example 6 group

This example was carried out with reference to Example 1, with the only difference being that, during the preparation of the electrolyte, the mass ratios of the solvent components were changed, such that the mass content percentage of the unsaturated nitrile compound 1,4-dicyano-2-butene was changed. Specifically:
in Example 6-1, the mass content percentage of 1,4-dicyano-2-butene was 0, which meant that the unsaturated nitrile compound was not added;
in Example 6-2, the mass content percentage of 1,4-dicyano-2-butene was 0.1;
in Example 6-3, the mass content percentage of 1,4-dicyano-2-butene was 2;
in Example 6-4, the mass content percentage of 1,4-dicyano-2-butene was 5.

See Table 1 for details.

### Comparative Example 1 group

This comparative example was carried out with reference to Example 1, with the only difference being that, during the preparation of the electrolyte, the mass ratios of the solvent components were changed, such that the mass content percentage m1% of the fluorinated solvent in the electrolyte was changed. See Table 1 for details.

### Comparative Example 2

This comparative example was carried out with reference to Example 1, with the only difference being that, during the preparation of the electrolyte, no fluorinated solvent was added. See Table 1 for details.

### Comparative Example 3

This comparative example was carried out with reference to Example 1, with the only difference being that, during the preparation of the negative electrode plate, the groove corresponding to the tab groove was not provided. See Table 1 for details.

**Table 1**

| Group | m1-S/10 | S = L1 × L2 | m1-m2 | Mass content percentage m1 of fluorinated solvent in electrolyte / % | Length L1 of groove / mm | Width L2 of groove /mm | Mass content m2 of silicon element in negative electrode active material layer / % | Areal density s1 of base coating/ mg/cm² | Areal density s2 of top coating/ mg/cm² | M = s1/ s2 |
|---|---|---|---|---|---|---|---|---|---|---|
| Example 1 | 15 | 150 | 5 | 30 | 15 | 10 | 25 | 2.3 | 1.74 | 1.32 |
| Example 2-1 | -5 | 150 | -15 | 10 | 15 | 10 | 25 | 2.3 | 1.74 | 1.32 |
| Example 2-2 | 25 | 150 | 15 | 40 | 15 | 10 | 25 | 2.3 | 1.74 | 1.32 |
| Example 2-3 | -10 | 150 | -20 | 5 | 15 | 10 | 25 | 2.3 | 1.74 | 1.32 |
| Example 2-4 | 35 | 150 | 25 | 50 | 15 | 10 | 25 | 2.3 | 1.74 | 1.32 |
| Example 3-1 | -15 | 450 | 5 | 30 | 30 | 15 | 25 | 2.3 | 1.74 | 1.32 |
| Example 3-2 | -90 | 1200 | 5 | 30 | 40 | 30 | 25 | 2.3 | 1.74 | 1.32 |
| Example 3-3 | 24 | 60 | 5 | 30 | 10 | 6 | 25 | 2.3 | 1.74 | 1.32 |
| Example 4-1 | 15 | 150 | 15 | 30 | 15 | 10 | 15 | 2.3 | 1.74 | 1.32 |
| Example 4-2 | 15 | 150 | 0 | 30 | 15 | 10 | 30 | 2.3 | 1.74 | 1.32 |
| Example 4-3 | 15 | 150 | -10 | 30 | 15 | 10 | 40 | 2.3 | 1.74 | 1.32 |
| Example 5-1 | 15 | 150 | 5 | 30 | 15 | 10 | 25 | 2.3 | 2.3 | 1 |
| Example 5-2 | 15 | 150 | 5 | 30 | 15 | 10 | 25 | 0.5 | 3 | 2 |
| Example 5-3 | 15 | 150 | 5 | 30 | 15 | 10 | 25 | 5 | 0.2 | 3 |
| Example 6-1 | 15 | 150 | 5 | 30 | 15 | 10 | 25 | 2.3 | 1.74 | 1.32 |
| Example 6-2 | 15 | 150 | 5 | 30 | 15 | 10 | 25 | 2.3 | 1.74 | 1.32 |
| Example 6-3 | 15 | 150 | 5 | 30 | 15 | 10 | 25 | 2.3 | 1.74 | 1.32 |
| Example 6-4 | 15 | 150 | 5 | 30 | 15 | 10 | 25 | 2.3 | 1.74 | 1.32 |
| Comparative Example 1-1 | -13 | 150 | -23 | 2 | 15 | 10 | 25 | 2.3 | 1.74 | 1.32 |
| Comparative Example 1-2 | 40 | 150 | 30 | 55 | 15 | 10 | 25 | 2.3 | 1.74 | 1.32 |
| Comparative Example 2 | -15 | 150 | -25 | 0 | 15 | 10 | 25 | 2.3 | 1.74 | 1.32 |
| Comparative Example 3 | / | / | 5 | 30 | / | / | 25 | 2.3 | 1.74 | 1.32 |

### Test examples

### 1) Cycling performance test

The lithium-ion batteries obtained in the above examples and comparative examples were subjected to charge-discharge cycling at 25°C at a discharge rate of 2C within the charge-discharge cutoff voltage range. The discharge capacity in the first cycle was test and recorded as x1 mAh, and the discharge capacity in the Nth cycle was test and recorded as y1 mAh. The cycling capacity retention rate R₁ in the Nth cycle was obtained by dividing the capacity in the Nth cycle by that in the first cycle, i.e., R₁ = y1/x1. The number of cycles of the battery at which the cycling capacity retention rate R₁ reached 80% / T was recorded. The results are recorded in Table 2.

### 2) Safety performance test

The lithium-ion batteries obtained in the above examples and comparative examples were placed in an environment of 25°C and discharged at 0.2C to a lower limit voltage of 3.0 V, allowed to stand for 10 min, and then charged at 1C to an upper limit voltage of 4.55 V with a cut-off current of 0.05C, at which point the lithium-ion batteries were in a fully charged state. The lithium-ion batteries in a fully-charged state were then placed in an oven, and the temperature inside the oven was increased at a rate of 5°C/min. When the temperature inside the oven reached 132°C, the temperature was maintained constant for 60 min, and it was observed whether the lithium-ion batteries caught fire or exploded. If there was no fire or explosion in the battery, the battery was determined to pass the test. The test was repeated for 10 times, and the test results are recorded in Table 2.

### 3) Determination of Dv 50

The Dv50 refers to a particle size corresponding to a cumulative volume distribution percentage of particles of 50%, i.e., the volume median particle size. The particle size is measured by a laser particle size analysis method. For example, the particle size is measured using a MALVERN particle size analyzer according to the following steps: dispersing the silicon-based material in deionized water containing a dispersant (e.g., nonylphenol ethoxylates, having a mass content percentage of 0.02-0.03 wt%) to form a mixture; subjecting the mixture to ultrasonic treatment for 2 min; and then placing the mixture after the ultrasonic treatment into the MALVERN particle size analyzer for measurement.

### 4) Measurement of average sphericity q of silicon-based material

The average sphericity q of the silicon-based material is determined using a method well known in the art. For example, an SEM image (in backscattered electron mode) of the negative electrode active material layer at a magnification of 2500× is analyzed using the image processing software (ImagePro Plus) to obtain the perimeter and area of each silicon-based material particle in the image. The perimeter-equivalent radius r1 and area-equivalent radius r2 of each silicon-based material particle are calculated respectively, and the sphericity is defined as r2/r1. The sphericity values of all silicon-based material particles are then weighted averaged to obtain the average sphericity q of the silicon-based material.

### 5) Measurement of areal density of negative electrode active material

The areal density of the negative electrode active material refers to a mass of the negative electrode active material layer coated on a unit area of the negative electrode current collector, where the areal density herein is the areal density on a single surface. The areal density is measured according to the following steps. After the battery is completely discharged and disassembled, the mass of the coating (either the base coating or the top coating of the negative electrode active material layer) per unit area is weighed to be m (the mass of the base coating or top coating on either surface of the negative electrode current collector is weighed after deducting the mass of the negative electrode current collector). The projected area of the coating on the negative electrode current collector is s. The areal density is calculated as m/s.

**Table 2**

| Group | Number of cycles of battery at which cycling capacity retention rate R₁ reaches 80% / T | Number of passing safety performance test / times |
|---|---|---|
| Example 1 | 687 | 10 |
| Example 2-1 | 657 | 9 |
| Example 2-2 | 640 | 8 |
| Example 2-3 | 635 | 7 |
| Example 2-4 | 627 | 7 |
| Example 3-1 | 645 | 8 |
| Example 3-2 | 643 | 7 |
| Example 3-3 | 646 | 9 |
| Example 4-1 | 654 | 10 |
| Example 4-2 | 643 | 9 |
| Example 4-3 | 627 | 7 |
| Example 5-1 | 657 | 8 |
| Example 5-2 | 601 | 6 |
| Example 5-3 | 587 | 7 |
| Example 6-1 | 592 | 6 |
| Example 6-2 | 642 | 8 |
| Example 6-3 | 650 | 9 |
| Example 6-4 | 613 | 9 |
| Comparative Example 1-1 | 458 | 3 |
| Comparative Example 1-2 | 497 | 2 |
| Comparative Example 2 | 421 | 1 |
| Comparative Example 3 | 379 | 0 |

The preferred embodiments of the present disclosure have been described in detail above; however, the present disclosure is not limited thereto. Within the technical concept of the present disclosure, various simple modifications can be made to the technical solution of the present disclosure, including the combination of various technical features in any other suitable way. These simple modifications and combinations should also be regarded as the content disclosed by the present disclosure and all fall within the scope of protection of the present disclosure.

## Claims

1. A battery, comprising a negative electrode plate (100), a positive electrode plate (200) and an electrolyte, wherein the negative electrode plate (100) comprises a negative electrode current collector (110) and a negative electrode active material layer (120) located on a surface of at least one side of the negative electrode current collector (110), the positive electrode plate (200) comprises a positive electrode current collector (210) and a positive electrode active material layer (220) located on a surface of at least one side of the positive electrode current collector (210),
a tab groove (230) is provided on the positive electrode active material layer (220) with a positive tab (240) accommodated in the tab groove (230) and a tab adhesive layer (250) provided on a surface of the positive tab (240),
a groove (130) is provided on the negative electrode active material layer (120), the tab groove (230) is arranged opposite the groove (130) in a third direction of the positive electrode plate (200), and an insulating adhesive layer (300) is provided in the groove (130), and
the electrolyte comprises a fluorinated solvent, and a mass content percentage of the fluorinated solvent in the electrolyte is m1%, wherein 5% ≤ m1% ≤ 50%.

2. The battery according to claim 1, wherein a length of the groove (130) in a first direction of the negative electrode plate (100) is L1, wherein 5 mm ≤ L1 ≤ 40 mm;
and/or, a width of the groove (130) in a second direction of the negative electrode plate (100) is L2, wherein 4 mm ≤ L2 ≤ 30 mm;
and/or, a depth of the groove (130) in a third direction of the negative electrode plate (100) is L3, wherein 0.005 mm ≤ L3 ≤ 0.15 mm.

3. The battery according to claim 1, wherein an orthographic projection area of the groove (130) in a third direction of the negative electrode plate (100) is S; and
the S and the m1 satisfy m1 ≥ S/10, wherein S mm² = L1 × L2; wherein a length of the groove (130) in a first direction of the negative electrode plate (100) is L1, and a width of the groove (130) in a second direction of the negative electrode plate (100) is L2.

4. The battery according to any one of claims 1-3, wherein the fluorinated solvent comprises at least one of a fluorinated carbonate solvent, a fluorinated carboxylate solvent, a fluorinated ether solvent, a fluorinated benzene solvent;
preferably, the fluorinated solvent comprises at least one of fluorinated methyl ethyl carbonate, fluorinated diethyl carbonate, fluorinated dimethyl carbonate, fluorinated ethyl acetate, fluorinated methyl propionate, fluorinated ethyl propionate, fluorinated propyl propionate, bis(2,2,2-trifluoroethyl) ether, 2,2,2-trifluoroethyl-1,1,2,2-tetrafluoroethyl ether, 1,1,2,2-tetrafluoroethyl-2,2,3,3-tetrafluoropropyl ether, 1H,1H,5H-octafluoropentyl-1,1,2,2-tetrafluoroethyl ether, methyl nonafluorobutyl ether, tris(trifluoroethoxy)methane, ethyl nonafluorobutyl ether, monofluorobenzene, and p-difluorobenzene.

5. The battery according to any one of claims 1-4, wherein the electrolyte comprises an unsaturated nitrile compound comprising at least one of 1,4-dicyano-2-butene, 2-methyl-2-butenenitrile, and isopropylidenemalononitrile;
preferably, a mass content percentage of the unsaturated nitrile compound in the electrolyte is 0.1% - 5%.

6. The battery according to any one of claims 1-5, wherein a length of the tab adhesive layer (250) in a first direction of the positive electrode plate (200) is a, wherein 10 mm ≤ a ≤ 40 mm;
and/or, a width of the tab adhesive layer (250) in a second direction of the positive electrode plate (200) is b, wherein 8 mm ≤ b ≤ 35 mm;
and/or, an orthographic projection area of the tab adhesive layer (250) in the third direction of the positive electrode plate (200) is 150 mm² - 700 mm².

7. The battery according to any one of claims 1-6, wherein the negative electrode active material layer (120) comprises a silicon-based material, wherein a mass content percentage of silicon element in the negative electrode active material layer (120) is m2% based on a total mass of the negative electrode active material layer (120), and the m1 and the m2 satisfy m1 ≥ m2;
preferably, 2% ≤ m2% ≤ 40%;
and/or, the silicon-based material has a particle size Dv50 of 5 µm - 15 µm;
and/or, the silicon-based material particles have an average sphericity q of 0.5 - 1.

8. The battery according to any one of claims 1-7, wherein the negative electrode active material layer (120) comprises a base coating adjacent to the negative electrode current collector (110) and a top coating located on a surface of one side of the base coating facing away from the negative electrode current collector (110), wherein an areal density s1 of the base coating is greater than an areal density s2 of the top coating.

9. The battery according to claim 8, wherein 0.5 mg/cm² ≤ s1 ≤ 5 mg/cm²;
and/or, 0.2 mg/cm² ≤ s2 ≤ 3 mg/cm²;
and/or, a ratio of the areal density s1 of the base coating to the areal density s2 of the top coating is M, wherein 1 ≤ M ≤ 2.5;
and/or, the base coating has a thickness of 0.02 mm - 0.08 mm;
and/or, the top coating has a thickness of 0.015 mm-0.07 mm.

10. An electronic device, wherein the electronic device comprises the battery according to any one of claims 1-9.
